# FASCICULE DE BREVET EUROPEEN

(11) **EP 1 045 306 B1**
(45) Date de publication et mention de la délivrance du brevet: **07.11.2007**
(21) Numéro de dépôt: 00400982.5
(22) Date de dépôt: 10.04.2000
(51) Int. Cl.: G06F 9/46

(54) **Procédé de modification d'un protocole entre objets distribués**
Verfahren zur Änderung eines Protokolls zwischen verteilten Objekten
Method of modifying a protocol between distributed objects

(30) Priorité: 15.04.1999 FR 9904713
(43) Date de publication de la demande: 18.10.2000
(73) Titulaire: Alcatel Lucent, 75008 Paris (FR)
(72) Inventeur: Banctel, Fabrice, 91190 Gif-sur-Yvette (FR); Pietre, Armel, 75015 Paris (FR)
(74) Mandataire: Chaffraix, Sylvain

(56) Documents cités:
- EP-A- 0 651 328
- US-A- 5 787 251

## Description

La présente invention concerne un procédé de modification d'un protocole entre objets distribués, dans un environnement basé sur un gestionnaire d'objets distribués ORB, acronyme anglo-saxon pour *Object Request Broker*. On peut citer comme ORB connu et utilisés, l'ORB DCOM pour *Distributed Component Object Model*.

Nombre d'applications utilisent un tel environnement. On peut citer à titre d'exemple les applications de supervision en télécommunication ou transport, les applications constituant un réseau intelligent,...

Dans un environnement d'objets distribués, une application peut utiliser différents serveurs, pour fournir des services à des clients.

On appelle processus client, un programme qui utilise des services, et processus serveur, un programme qui offre des services à des clients.

Un objet du processus client (processus qui correspond donc à une instance d'exécution d'un programme) peut solliciter un service du serveur en lui envoyant un message correspondant. Un objet correspondant du serveur exécute le service et renvoie le cas échéant une réponse au demandeur.

Dans l'invention, on s'intéresse plus particulièrement à la transmission à l'objet client de notifications (*call-back*, dans la littérature anglo-saxonne), qui sont des messages émis par un objet serveur vers un objet client à l'initiative de l'objet serveur, après que l'objet client ait souscrit à un service de notifications. Un exemple typique d'utilisation d'un tel service de notification concerne les applications de supervision, dans lesquelles les clients veulent être informés de changements de propriétés d'objets.

Pour s'inscrire à un tel service d'un objet serveur, un objet client appelle habituellement sur cet objet serveur une méthode « *advise* », terme anglo-saxon couramment utilisé et qui signifie « avertissez_moi ». Dans cette méthode, il peut passer des paramètres, notamment des paramètres d'entrée pour permettre à l'objet serveur de l'appeler en retour (*call-back*), quand il a des notifications à transmettre.

En pratique, plusieurs protocoles pour établir le protocole de communication en retour peuvent être utilisés.

Dans le cas plus particulier d'un ORB de type DCOM, un mécanisme simple peut-être utilisé. Selon ce mécanisme, l'objet client qui dispose d'une ou plusieurs interfaces d'entrée, fournit comme paramètre d'entrée à l'objet serveur, sur une interface d'abonnement spécifique de cet objet, un pointeur sur l'une de ses interfaces, pour permettre à l'objet serveur de le rappeler pour lui envoyer une notification.

Un autre mécanisme disponible, est le mécanisme des points de connexion (EP-A-0 651 328).

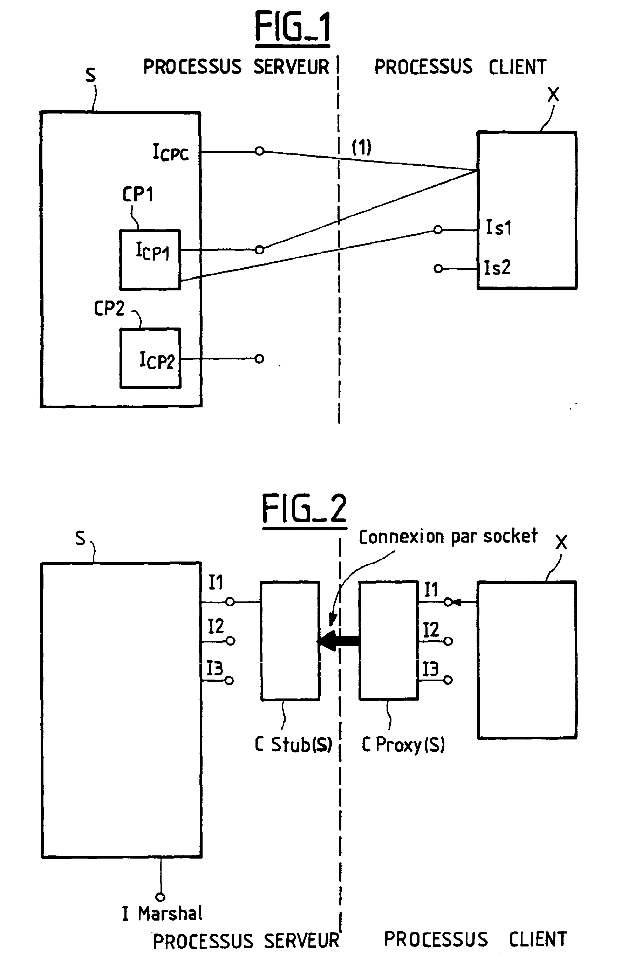

Un ORB comme l'ORB DCOM propose en effet un mécanisme standard dit à objets connectables pour permettre à un objet client de s'abonner sur un objet serveur. Selon ce mécanisme schématiquement représenté sur la figure 1, l'objet serveur qui envoie les notifications, appelé objet connectable, peut supporter une interface d'attribution d'un point de connexion (*Connection Point Container Interface*).

Dans l'exemple représenté, l'objet serveur, connectable, S comprend une interface d'attribution de point de connexion ICPC. Par cette interface d'entrée ICPC, n'importe quel client peut requérir un point de connexion particulier.

Dans l'exemple représenté, un objet client X comprend une interface d'entrée IS1 et une interface d'entrée IS2. Il peut envoyer sur l'interface d'attribution de point de connexion ICPC de l'objet serveur S une demande d'attribution (1) d'un point de connexion pour un protocole donné associé à son interface d'entrée IS1. Si l'objet serveur S supporte ce protocole donné, il créé un objet point de connexion correspondant CP1. Ce point de connexion CP1 comprend une interface de point de connexion ICP1. L' objet client peut alors souscrire au service en appelant la méthode advise (*advise method*) (2) sur cette interface ICP1 du point de connexion CP1. Par la suite le point de connexion CP1 enverra les notifications (3) sur l'interface d'entrée correspondante IS1 de l'objet client.

S'il veut recevoir des notifications selon un autre protocole sur l'autre interface d'entrée IS2, l'objet client peut refaire une demande d'attribution d'un point de connexion à l'objet serveur pour ce protocole. L'objet serveur crée alors le cas échéant un nouvel objet point de connexion CP2.

En pratique, et comme représenté sur la figure 1, l'objet connectable S et les points de connexion CP1, CP2 sont souvent dans le même objet, c'est à dire, en d'autres termes, qu'ils sont dans la même classe en langage C++, même si leurs interfaces sont séparées.

Un autre mécanisme qui peut être utilisé est le mécanisme d'aiguillage connu sous l'expression anglo-saxonne « *custom marshalling mechanism* ». Selon ce mécanisme d'aiguillage bien connu de l'homme du métier dans le cadre plus particulier de l'ORB DCOM, on remplace une paire d'éléments représentants standard du protocole objet-objet utilisée par l'objet client pour s'abonner sur l'objet serveur, par une paire d'éléments représentants personnalisée, comme représenté schématiquement sur la figure 2, et par laquelle on peut utiliser un protocole de communication personnalisé, spécifique, comme les sockets représentés sur la figure 2.

Rappelons selon le protocole objet-objet bien connu, lorsqu'un objet d'un processus client envoie un message sur un objet donné d'un processus serveur, ce message passe par une paire d'éléments représentants de l'objet serveur. C'est cette paire qui va gérer les appels inter processus correspondants, de manière transparente pour les deux objets distants que sont l'objet client et l'objet serveur. Cette paire comprend dans le processus client, un élément représentant Proxy de l'objet serveur et dans le processus serveur, un élément représentant Stub correspondant.

L'avantage d'un tel protocole objet-objet est que les objets n'ont pas à savoir où se localisent les objets avec lesquels ils échangent des messages. Avec ce protocole, l'ORB cache en quelque sorte la localisation des objets, ce qui simplifie considérablement les accès aux objets où qu'ils se trouvent.

L'élément Proxy de la paire d'éléments représentants est tel qu'il comporte toutes les interfaces de l'objet serveur.

Les paires d'éléments représentants Proxy/Stub standards de ces interfaces peuvent ne pas convenir à l'objet client, par exemple, parce qu'ils ne sont pas assez efficace.

Le mécanisme d'aiguillage proposé par l'ORB permet l'utilisation d'une autre interface.

Les objets qui permettent l'utilisation d'un tel mécanisme, comportent une interface d'aiguillage, notée IMarshal.

Ainsi, lorsque l'ORB détecte qu'une nouvelle paire d'éléments Proxy va être créée pour l'envoi de messages entre deux objets distants, il demande à l'objet destinataire des messages si il supporte une interface de type aiguillage. Si il ne supporte pas une telle interface, l'ORB crée la paire d'éléments représentants standard. Si il supporte une telle interface, il crée une paire d'éléments représentants personnalisée, correspondant à la classe d'objet spécifiée par l'objet destinataire.

Cette paire d'éléments représentants personnalisée remplace intégralement, la paire d'éléments représentants standard. En d'autres termes, elle comprend toutes les interfaces que comprendrait la paire standard.

On a ainsi représenté sur la figure 2, un schéma simplifié de l'application d'un tel mécanisme. L'objet serveur S comprend une interface d'aiguillage IMarshal, ce qui permet à l'ORB de créer une paire personnalisée d'éléments représentants. L'objet client X envoie ses messages à l'objet serveur S par cette paire personnalisée formée d'un élément représentant Proxy personnalisé CProxy(S) et un élément représentant Stub personnalisé CStub(S).

Ces deux éléments représentants sont personnalisés en ce sens qu'ils mettent en oeuvre un protocole de communication inter objets personnalisé, correspondant à leur classe.

Un tel mécanisme est par exemple utilisé en pratique pour mettre en oeuvre (au niveau de la paire personnalisée) un protocole de communication par socket, avec connexion réseau par exemple si les deux objets sont sur des machines différentes, ou avec mémoire partagée, si les deux objets sont sur la même machine. C'est ce qui est représenté symboliquement sur la figure 2 avec la flèche indiquant une connexion par socket.

Un exemple d'utilisation connu de ce mécanisme concerne la réalisation d'un cache. Par exemple, la première fois que l'objet client demande le nom de l'objet serveur, l'élément Proxy personnalisé va le chercher, puis il le garde. Ainsi, les fois suivantes, il pourra fournir le nom directement, sans transmettre l'appel sur l'objet serveur.

Dans l'invention, on s'intéresse à la possibilité de modification des protocoles pour le service de notifications. La nécessité de modifier des protocoles de notification peut apparaître en cours de développement ou d'utilisation d'un système applicatif, notamment pour des raisons d'optimisation des appels. Par exemple, il peut d'avérer nécessaire de grouper des notifications émises par différents objets serveurs, de manière à ne transmettre qu'un seul entête pour tous ces messages. Le besoin d'optimiser peut apparaître après que l'application ait déjà été implémentée. Et il faut pouvoir changer le protocole de communication, sans changer les interfaces des objets.

Si on considère le mécanisme utilisant l'interface d'abonnement spécialisée, changer de protocole implique la réécriture du code correspondant à cette interface dans l'objet serveur. Cela nécessite donc une recompilation de l'objet serveur. Avec le mécanisme par point de connexion, on retrouve ce même inconvénient, puisqu'en pratique, les points de connexion sont en réalité dans l'objet serveur lui-même. Il faut donc recompiler l'objet serveur pour changer le point de connexion. En outre les outils de développement correspondant sont tels qu'ils rendent difficile en pratique de changer la mise en oeuvre d'un point de connexion. Si le protocole concerné est générique, c'est à dire si il concerne beaucoup d'objets dans l'application, cette difficulté de modification devient très gênante.

Si on prend le mécanisme d'aiguillage, seule la paire personnalisée doit être changée, sans avoir besoin d'une recompilation de l'objet serveur, puisque les deux éléments de cette paire sont des objets séparés de l'objet serveur.

Par contre, pour écrire la paire personnalisée, il est nécessaire de connaître toutes les interfaces supportées par l'objet serveur. Dans l'exemple représenté sur la figure 2, elle doit comprendre les trois interfaces I1, I2, I3 de l'objet serveur (pas l'interface d'aiguillage utilisée par l'ORB pour mettre en oeuvre le mécanisme d'aiguillage). On ne peut pas utiliser une paire personnalisée pour une seule interface. Ceci est un gros problème si le protocole qui change est suffisamment générique pour concerner beaucoup d'objets avec des interfaces différentes.

La présente invention a pour objet un procédé de modification d'un protocole qui n'a pas les inconvénients précités.

Selon l'invention, le procédé de modification du protocole est basé sur l'utilisation du mécanisme de point de connexion en combinaison avec le mécanisme d'aiguillage. Cette solution repose sur le fait qu'un point de connexion est un objet COM comme les autres, même si sa position (dans l'objet serveur) lui donne un statut quelque peu différent. On peut donc lui appliquer le mécanisme d'aiguillage comme à tout objet COM. Or le point de connexion n'a qu'une seule interface d'entrée : l'interface de point de connexion. Les paires personnalisées d'éléments représentants que permet d'utiliser le mécanisme d'aiguillage ne comporte donc que cette interface d'entrée de point de connexion. De cette manière, les inconvénients du mécanisme d'aiguillage sont supprimés en appliquant ce mécanisme au point de connexion. Et la difficulté d'utilisation des outils de développement pour modifier les points de connexion est moins gênante puisque la modification n'est pas liée à la modification d'un protocole en lui-même : la modification permet de modifier le protocole par les paires personnalisées. En d'autres termes tous les points de connexion sont modifiés de la même manière, pour permettre l'application du mécanisme d'aiguillage sur eux.

Dans l'invention, on prévoit donc de modifier les points de connexion, en leur ajoutant une interface d'aiguillage, permettant l'utilisation du mécanisme d'aiguillage sur ce point de connexion.

Ainsi, telle que caractérisée l'invention concerne un procédé de modification d'un protocole de notification selon la revendication 1.

D'autres caractéristiques et avantages de l'invention sont décrits dans la description suivante, faite à titre indicatif et nullement limitatif et en référence aux dessins annexés dans lesquels :
- la figure 1 représente schématiquement un protocole de notification utilisant un mécanisme par point de connexion selon l'état de la technique;
- la figure 2 représente schématiquement un protocole de notification utilisant un mécanisme d'aiguillage selon l'état de la technique ;
- la figure 3 représente schématiquement un procédé de communication de notification dans un premier exemple de mise en oeuvre de l'invention ; et
- la figure 4 représente schématiquement un procédé de communication de notification dans un deuxième exemple de mise en oeuvre de l'invention.

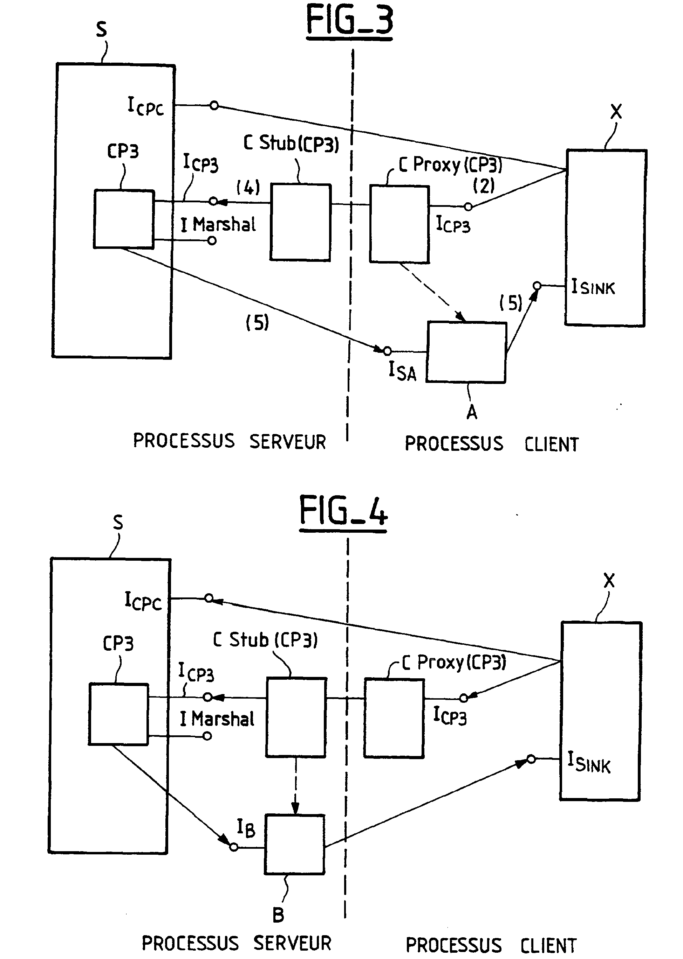

Sur la figure 3, on a représenté un exemple d'application de l'invention, correspondant au cas où un nouveau mécanisme est introduit du côté du premier élément représentant Proxy.

Dans le processus client, on a un objet client X comprenant une interface d'entrée notée ISINK.

Dans le processus serveur, on a un objet serveur S comprenant une interface d'attribution d'un point de connexion ICPC.

L'objet client X envoie une demande d'attribution (1) d'un point de connexion sur l'interface d'attribution correspondante ICPC de l'objet serveur S.

Ce dernier créé alors un objet point de connexion correspondant CP3, qui est tel que, selon l'invention, il comprend non seulement une interface de point de connexion ICP3, mais aussi une interface d'aiguillage IMarshal.

L'objet client peut alors envoyer une demande d'avertissement *advise* (2), avec comme paramètre, un pointeur sur son interface d'entrée IA. L'ORB qui détecte qu'une communication doit se faire entre l'objet X et l'objet point de connexion CP3, demande à l'objet point de connexion s'il supporte une interface d'aiguillage, et comme c'est le cas selon le procédé de l'invention, permet la création d'une paire d'éléments représentants personnalisée CProxy(CP3) et CStub(CP3).

La modification du protocole tient dans la paire personnalisée d'éléments représentants créée. Ces éléments représentants étant des objets, indépendants des autres, on comprend que pour modifier le protocole, il faut en fait seulement modifier ces objets (PROXY et STUB). Le procédé de modification s'en trouve particulièrement simplifié. Si le protocole en cause est générique, il suffit de le faire une fois. Comme ces objets sont des éléments représentants de points de connexion, il ne comporte qu'une seule interface d'entrée, l'interface point de connexion. L'interface d'aiguillage ne concerne que l'objet point de connexion, pas les éléments représentants. Ainsi, ce qui était un inconvénient dans le mécanisme d'aiguillage appliqué à n'importe quel objet COM pouvant comporter de multiples interfaces, devient un avantage appliqué à un objet point de connexion.

La figure 3 représente un exemple de modification du protocole de communication, selon lequel on veut que les notifications émises via le point de connexion CP3 passent toutes par un objet A prévu du côté de l'élément représentant Proxy, c'est à dire dans le processus client.

Dans ce cas, le proxy personnalisé CProxy(CP) est tel que lorsqu'il reçoit le message advise (2), il remplace le paramètre (pointeur) identifiant l'interface I_{SINK} de l'objet client X, par le paramètre identifiant l'interface d'entrée IA de l'objet A, et transmet le message ainsi modifié (3) sur l'élément représentant CStub(CP3), qui transmet ce message (4) sur l'interface de point de connexion ICP3 de l'objet point de connexion CP3 pour appeler la méthode correspondante sur l'objet serveur.

Ensuite, lorsqu'une notification est envoyée par l'objet serveur via l'objet point de connexion CP3, cette notification est envoyée sur l'objet A du nouveau protocole, qui peut traiter cette notification et l'envoyer à l'objet client final.

A cet effet, on notera que l'élément CProxy(CP3) envoie un message sur cet objet A, pour l'informer du message *advise* qu'il a reçu de l'objet X et lui transmettre les paramètres correspondants, dont le paramètre identifiant son interface d'entrée ISINK.

Un tel exemple d'application du procédé de l'invention est intéressant dans le cas où il est intéressant de traiter les notifications du côté processus client.

La figure 4 représente un exemple d'application du procédé de modification du protocole, lorsque cette modification intervient côté processus serveur.

Dans ce cas, le proxy personnalisé CProxy(CP) est tel que lorsqu'il reçoit le message *advise* (2), il le transmet (3) à l'élément représentant CStub(CP3). Ce dernier remplace le paramètre (pointeur) identifiant l'interface I_{SINK} de l'objet client X, par le paramètre identifiant l'interface d'entrée IB de l'objet B et transmet le message ainsi modifié (4) sur l'interface de point de connexion I_{CP}3 de l'objet point de connexion CP3 pour appeler la méthode correspondante sur l'objet serveur.

Ensuite, lorsqu'une notification est envoyée par l'objet serveur via l'objet point de connexion CP3, cette notification est envoyée sur l'objet B du nouveau protocole, qui peut traiter cette notification et l'envoyer à l'objet client final.

A cet effet, on notera que l'élément CStub(CP3) envoie un message sur cet objet B, pour l'informer du message advise qu'il a reçu de l'objet X et lui transmettre les paramètres correspondant, dont le paramètre identifiant l'interface d'entrée ISINK de cet objet client.

Cet exemple particulier d'application de l'invention permet la modification du protocole côté processus serveur, pour grouper les notifications à émettre vers un objet client, de manière à réduire le nombre d'appels inter processus.

On remarquera que l'on peut très bien combiner les deux exemples, avec un objet A dans le processus client et un objet B dans le processus serveur.

On notera aussi que ces objets A et B ne que des exemples correspondant à la modification du protocole. Les modifications du protocole qui peuvent être effectuées sont très diverses. Une modification d'un protocole peut être entièrement supportée par la paire personnalisée d'éléments représentants, sans création d'autres objets tels que A et B.

L'homme du métier peut ainsi utiliser l'invention de différentes manières pour modifier un protocole dans une application. Dans tous les cas, il devra modifier les points de connexion pour leur ajouter l'interface d'aiguillage selon l'invention, en utilisant de manière appropriée les outils de développement à sa disposition.

Ensuite, il pourra réécrire les paires proxy/stub personnalisées nécessaires, pour mettre en oeuvre le protocole modifié.

Cette modification du protocole est alors transparente pour les objets serveurs et clients.

## Revendications

1. Procédé de mise en oeuvre d'un protocole de notification personnalisé entre un objet (X) d'un processus client et un objet(S) d'un processus serveur, dans un environnement basé sur un gestionnaire d'objets distribués ORB, ledit procédé consistant à attribuer à l'objet client (X) d'un service de notification offert par l'objet serveur, un point de connexion (CP3) de l'objet serveur (S), **caractérisé en ce que** ledit point de connexion comprend une interface d'aiguillage (IMarshal) permettant la mise en oeuvre d'un protocole objet-objet entre l'objet client (X) et ledit point de connexion (CP3) au moyen d'une paire personnalisée d'éléments représentants (CProxy(CP3), CStub(CP3)) du point de connexion, ladite paire personnalisée permettant la mise en oeuvre dudit protocole de notification personnalisé.

2. Procédé selon la revendication 1, **caractérisé en ce que** ladite paire personnalisée est telle que les notifications émises par ledit point de connexion sont reçues par un objet déterminé, qui traite lesdites notifications pour les envoyer à l'objet client destinataire.

3. Procédé selon la revendication 2, **caractérisé** ne ce que ledit objet déterminé est un objet (A) du processus client.

4. Procédé selon la revendication 2, **caractérisé** ne ce que ledit objet déterminé est un objet (B) du processus serveur.

5. Procédé selon la revendication 3 ou 4, **caractérisé en ce que** lorsque ladite paire personnalisée reçoit un message de l'objet client (X) il substitue un paramètre d'identification d'une interface de l'objet client (I_{SINK}) par un paramètre d'identification d'une interface (I_{A}) dudit objet déterminé, avant de transmettre le message ainsi modifié au dit point de connexion (CP3).

6. Procédé selon la revendication 5, **caractérisé en ce que** ladite paire assure en outre la transmission du paramètre d'identification de l'interface de l'objet client (I_{SINK}) au dit objet déterminé (A).

7. Procédé selon l'une quelconque des revendications précédentes, **caractérisé en ce qu'**il s'applique à un environnement basé sur un ORB de type DCOM.

## Claims

1. A method of implementing a personalized call-back protocol between an object (X) of a client process and an object (S) of a server process in an environment based on an ORB distributed object manager, said method allocating a connection point (CP3) of the server object (S) to a client object (X) of a call-back service offered by the server object, said connection point is **characterized in that** it includes a marshaling interface (lMarshal) for implementing an object-object protocol between the client object (X) and said connection point (CP3) by means of a personalized pair of representative elements (CProxy(CP3), CStub(CP3)) of the connection point and said personalized pair enables implementation of said personalized call-back protocol.

2. A method according to claim 1, **characterized in that** said personalized pair is such that call-backs sent by said connection point are received by a particular object which processes them in order to send them to the destination client object.

3. A method according to claim 2, **characterized in that** said particular object is an object (A) of the client process.

4. A method according to claim 2, **characterized in that** said particular object is an object (B) of the server process,

5. A method according to claim 3 or claim 4, **characterized in that** if said personalized pair receives a message from the client object (X) it substitutes for a parameter identifying an interface (ISINK) of the client object a parameter identifying an interface (IA) of said particular object before sending the modified message to said connection point (CP3).

6. A method according to claim 5, **characterized in that** said pair also sends a parameter identifying the interface (ISINK) of the client object to said particular object (A).

7. A method according to any preceding claim, **characterized in that** it is applied to an environment based on a DCOM ORB.

## Patentansprüche

1. Verfahren zur Implementierung eines personalisierten Benachrichtigungsprotokolls zwischen einem Objekt (X) eines Client-Prozesses und einem Objekt (S) eines Server-Prozesses in einer auf einem Object Request Broker ORB basierenden Umgebung, wobei das Verfahren darin besteht, dass einem Client-Objekt (X) eines von dem Server-Objekt angebotenen Benachrichtigungsdienstes ein Verbindungspunkt (CP3) des Server-Objekts (S) zugewiesen wird, **dadurch gekennzeichnet, dass** der Verbindungspunkt eine Marshalling-Schnittstelle (IMarshal) umfasst, welche die Implementierung eines Objekt-Objekt-protokolls zwischen dem Client-Objekt (X) und dem Verbindungspunkt (CP3) mittels eines personalisierten Paares von Repräsentant-Elementen (CProxy(CP3), CStub(CP3)) des Verbindungspunktes ermöglicht, wobei das personalisierte Paar die Implementierung dieses personalisierten Benachrichtigungsprotokolls ermöglicht

2. Verfahren nach Anspruch 1, **dadurch gekennzeichnet, dass** das personalisierte Paar von der Art ist, dass die von dem Verbindungspunkt gesendeten Benachrichtigungen von einem festgelegten Objekt empfangen werden, das die Benachrichtigungen so verarbeitet, dass es sie an das Ziel-Client-Objekt sendet.

3. Verfahren nach Anspruch 2, **dadurch gekennzeichnet, dass** das festgelegte Objekt ein Objekt (A) des Client-Prozesses ist.

4. Verfahren nach Anspruch 2, **dadurch gekennzeichnet, dass** das festgelegte Objekt ein Objekt (B) des Server-Prozesses ist.

5. Verfahren nach Anspruch 3 oder 4, **dadurch gekennzeichnet, dass** dann, wenn das personalisierte Paar eine Nachricht des Client-Objekts (X) empfängt, es einen Parameter zur Identifizierung einer Schnittstelle des Client-Objekts (ISINK) durch einen Parameter zur Identifizierung einer Schnittstelle (IA) des festgelegten Objekte ersetzt, bevor es die auf diese Weise geänderte Nachricht an den Verbindungspunkt (CP3) überträgt.

6. Verfahren nach Anspruch 5, **dadurch gekennzeichnet, dass** das Paar außerdem die Übertragung des Identifizierungsparameters der Schnittstelle des Client-Objekts (ISINK) an das festgelegte Objekt (A) übernimmt.

7. Verfahren nach einem beliebigen der vorhergehenden Ansprüche, **dadurch gekennzeichnet, dass** es auf einen ORB des Typs DCOM angewendet wird.
